# EUROPÄISCHE PATENTSCHRIFT

(11) **EP 0 478 598 B1**
(45) Veröffentlichungstag und Bekanntmachung des Hinweises auf die Patenterteilung: **27.04.1994**
(21) Anmeldenummer: 90908942.7
(22) Anmeldetag: 08.06.1990
(51) Int. Cl.: C09D 17/00

(54) **DISPERSIONEN KUGELFÖRMIGER ANORGANISCHER PARTIKEL**
DISPERSIONS OF SPHERICAL INORGANIC PARTICLES
DISPERSIONS DE PARTICULES ANORGANIQUES SPHERIQUES

(30) Priorität: 19.06.1989 DE 3919940
(43) Veröffentlichungstag der Anmeldung: 08.04.1992
(73) Patentinhaber: MERCK PATENT GmbH, D-64271 Darmstadt (DE)
(72) Erfinder: BARON, Winfried, D-6101 Rossdorf 2 (DE); KNAPP, Martin, D-6110 Dieburg (DE); MARQUARD, Kurt, D-6107 Reinheim 1 (DE)
(86) Internationale Anmeldenummer: EP9000896
(87) Internationale Veröffentlichungsnummer: WO9015849

(56) Entgegenhaltungen:
- FR-A- 2 156 867
- US-A- 4 002 593

## Beschreibung

Die Erfindung betrifft Dispersionen kugelförmiger anorganischer Partikel, die stabil und agglomeratfrei sind.

Feine, kugelförmige anorganische Partikel, wie z.B. TiO₂- oder ZrO₂-Partikel, und insbesondere sphärische SiO₂-Partikel genießen besonderes Interesse als wertvolle Hilfsmittel im technisch-wissenschaftlichen Bereich sowie als interessante, wissenschaftliche Studienobjekte, ferner auch als Trägermaterial in der Chromatographie.

Einige Anwendungsgebiete solcher unporösen, kugelförmigen SiO₂-Partikel sind beispielsweise beschrieben in der DE-OS 36 16 133. Die Herstellung solcher monodispersen, sphärischen SiO₂-Teilchen ist in der DE-OS 36 16 133 beschrieben. Die entsprechenden TiO₂- oder ZrO₂-Partikel sind ebenfalls nach dem Fachmann bekannten Methoden herstellbar und sind auch im Handel erhältlich.

Bei allen Anwendungen wird die Anforderung gestellt, daß die Partikel in hoch monodisperser Form und ohne Agglomerate vorliegen. Es hat sich jedoch gezeigt, daß die Dispersionen solcher sphärischer Partikel in den üblichen Dispergiermedien wie Alkohole, vor allem z.B. Ethylenglykol, nicht ausreichend stabil sind.

Vor allem bei Pattikeln mit einem Durchmesser > 500 nm sind die bisher bekannten Dispersionen mit Ethylenglykol oder anderen Alkoholen nicht mehr stabil. Die Absetzgeschwindigkeit ist abhängig vom Teilchendurchmesser und schon die Partikel mit Kugeldurchmessern von z.B. 0,5 µm, 1,0 µm, 1,2 µm oder 1,5 µm setzen sich sehr rasch ab und bilden Agglomerate. Solche Dispersionen sind jedoch für die meisten Anwendungen nicht mehr geeignet.

Aufgabe der vorliegenden Erfindung war es daher, Dispersionen sphärischer anorganischer Teilchen zu finden, die die feinen Teilchen ideal verteilt und agglomeratfrei enthalten, und die auch bei Vorliegen größerer Durchmesser der Teilchen stabil sind.

Überraschenderweise wurde nun gefunden, daß organische Dispergiermedien, die bei Raumtemperatur zähflüssig oder fest sind, hervorragend als Dispergiermittel für solche sphärische Partikel geeignet sind.

Gegenstand der Erfindung sind daher Dispersionen kugelförmiger anorganischer Partikel, dadurch gekennzeichnet, daß organische Dispergiermedien mit Erstarrungspunkten im Bereich von 20°-120 °C als Dispergiermittel eingesetzt werden. Insbesondere bevorzugt sind dabei Dispersionen von sphärischen SiO₂-, TiO₂- oder ZrO₂-Partikeln. Die Partikelgröße liegt vorzugsweise zwischen 0,05 und 10 µm.

Als organische Dispergiermedien können vorzugsweise Polyether, Polyalkylenglykole, Paraffine, Harze, Wachse, Vinylpolymere, Polysiloxane, Polyolefine, Polyamide oder dergleichen, ferner auch Copolymere, wie z.B., ein Copolymeres aus Polyethylenwachsen und Vinylacetat eingesetzt werden.

Entscheidende Parameter für die Eignung eines Dispergiermediums sind die Polarität und Erstarrungspunkte, und damit verbunden auch das Molekulargewicht. Die Polarität ist durch die chemische Zusammensetzung des organischen Dispergiermediums beeinflußbar.

Für die Herstellung stabiler Dispersionen ist es selbstverständlich günstig, ein Dispergiermittel auszuwählen, das eine ähnliche Polarität wie die zu dispergierenden Partikel aufweist. So werden beispielsweise für die mehr hydrophilen SiO₂-Partikel vorzugsweise Dispergiermittel höherer Polarität ausgewählt werden. Andererseits sind für modifizierte SiO₂-Teilchen (die Herstellung und Beschreibung solcher modifizierten SiO₂-Partikel sind aus der DE-OS 36 16 133 zu entnehmen), die hydrophoben Charakter aufweisen können, entsprechende unpolare Dispergiermittel besser geeignet. Dies gilt ebenso für die ZrO₂- und TiO₂-Partikel. D.h. also, das Dispergiermedium muß so ausgewählt werden, daß eine gute Verträglichkeit mit den Partikeln gewährleistet ist.

Der wichtigste Parameter ist der Erstarrungspunkt des Dispergiermediums. Um eine erfindungsgemäße Dispersion zu erhalten, muß der Erstarrungspunkt zwischen 20° und 120 °C, vorzugsweise zwischen 30° und 70 °C liegen. D.h. bei Raumtemperatur ist die Dispersion zähflüssig bzw. fest. Die ideale Verteilung der Partikel bleibt nach dem Erstarren der Masse dann unverändert und stabil erhalten.

Das Molekulargewicht des Dispersionsmittels variiert von einigen Hundert bis zu einigen Hunderttausend. Vorzugsweise liegt es zwischen 300 und 50 000.

Die Dispersionen werden anschließend an die Synthese der entsprechenden Partikel durch Dispergieren der fertigen Partikel in einem ausgewählten Mittel in der Wärme hergestellt. Die ideale Verteilung der Partikel bleibt nach dem Abkühlen stabil und unverändert erhalten, da beim Erstarren der Masse dieser ideale Zustand hohen Dispersionsgrades praktisch eingefroren wird.

Besonders bevorzugt werden Polyethylenglykole mit einer Erweichungstemperatur von 30°-120 °C, vorzugsweise von 30°-70 °C eingesetzt, die bei Raumtemperatur relativ zähflüssig oder fest sind.

Je nach Anwendungszweck kann man ein geeignetes Polyethylenglykol auswählen. Auch flüssige Polyethylenglykole sind einsetzbar.

Die Vorteile dieser Dispersionen liegen in der Löslichkeit des Polyethylenlgykols in vielen Lösungsmitteln, einschließlich Wasser, sowie in der Verträglichkeit mit den anorganischen Partikeln.

Die stabilen Dispersionen nehmen die Eigenschaften des Polyethylenglykols an und enthalten die sphärischen Partikel ideal verteilt und agglomeratfrei.

Die Feststoffkonzentration in den erfindungsgemäßen Dispersionen ist ebenfalls je nach Anwendung wählbar und liegt bei 1 %-50 %, vorzugsweise bei 20-50 %.

Die erfindungsgemaßen Dispersionen sind wiederaufschmelzbar, gießbar und damit in eine gut handhabbare Form zu bringen. Die Dispersionen lassen sich dadurch z.B. auch gut Ein- und Abwiegen.

Mit dieser Erfindung stehen somit der Technik und Wissenschaft exzellente Dispersionen kugelförmiger Partikel, insbesondere sphärischer SiO₂-Teilchen, die auch modifiziert sein können, die stabil sind und in denen der Zustand hohen Dispersionsgrades eingefroren ist, für verschiedenste Anwendungszwecke zur Verfügung.

### Beispiel 1

In einem Rotationsverdampfer werden 270 g Polyethylenglykol PEG 1000 (mittlere Molmasse um 1000) vorgelegt. Bei einer Temperatur von 70-90 °C und einem Druck von ca. 30 mmHg wird portionsweise eine Suspension von 180 g SiO₂-Partikel in Alkohol/Wasser (direkt aus der Herstellung der SiO₂-Partikel analog der in der DE-OS 36 16 133 beschriebenen Weise) in den Rotationsverdampfer eingezogen und gleichzeitig dabei das Lösungsmittel Wasser/Alkohol abdestilliert.

Nach Abdestillieren des gesamten Lösungsmittels verbleiben ca. 450 g Schmelze mit 40 % Gehalt an Feststoff, der homogen in der Schmelze verteilt ist.

Man gießt die Schmelze aus, läßt erstarren und erhält so eine stabile Dispersion, die beliebig einsetzbar ist.

### Beispiel 2

Analog Beispiel 1 erhält man Dispersionen mit ZrO₂- oder TiO₂-Partikeln in Polyethylenglykol 1000.

### Beispiel 3

Analog Beispiel 1 erhält man eine stabile Dispersion von mit Octyltriethoxysilan modifizierten SiO₂-Partikeln in einem Paraffin mit einem Erstarrungspunkt von 42°-44 °C.

### Beispiel 4

Analog Beispiel 3 erhält man eine stabile Dispersion von mit Dodecyltriethoxysilan modifizierten SiO₂-Partikeln in einem Paraffin mit dem Erstarrungspunkt von 69°-73 °C.

## Patentansprüche

1. Dispersionen kugelförmiger anorganischer Partikel von SiO₂, TiO₂ oder ZrO₂ mit Partikelgröße zwischen 0,05 und 10µm, dadurch gekennzeichnet, daß sie als Dispersionen in organischen Dispergiermedien mit Erstarrungspunkten im Bereich von 20°-120° C vorliegen.

2. Dispersionen nach Anspruch 1, dadurch gekennzeichnet, daß sie als Dispersionen in Polyethern, Polyalkylenglycolen, Paraffinen oder Polyolefinen mit Erstarrungspunkten zwischen 20°-120°C vorliegen.

3. Dispersionen nach den Ansprüchen 1 oder 2, dadurch gekennzeichnet, daß sie als Dispersionen in Polyethylenglycolen mit einer Erweichungstemperatur Von 30°-120°, vorzugsweise von 30°-70°C, vorliegen.

4. Dispersionen nach den Ansprüchen 1 bis 3, dadurch gekennzeichnet, daß in ihnen die Feststoffkonzentration 1-50%, vorzugsweise 20-50%, beträgt.

## Claims

1. Dispersions of spherical inorganic particles of SiO₂, TiO₂ or ZrO₂ with a particle size between 0.05 and 10 µm, characterized in that they are in the form of dispersions in organic dispersing media having solidification points in the range of 20° - 120°C.

2. Dispersions according to Claim 1, characterized in that they are in the form of dispersions in polyethers, polyalkylene glycols, paraffins or polyolefins having solidification points between 20°-120°C.

3. Dispersions according to Claim 1 or 2, characterized in that they are in the form of dispersions in polyethylene glycols having a softening temperature of 30°-120°C, preferably from 30°-70°C.

4. Dispersions according to Claims 1 to 3, characterized in that the solids concentration therein is 1-50%, preferably 20-50%.

## Revendications

1. Dispersions de particules inorganiques, sphériques, de SiO₂, TiO₂ ou ZrO₂, dont la dimension des particules est entre 0,05 et 10 µm, caractérisées en ce qu'elles se présentent comme des dispersions dans des milieux de dispersions organiques qui ont des points de solidification dans le domaine de 20°-120° C.

2. Dispersions selon la revendication 1, caractérisées en ce qu'elles se présentent sous forme de dispersions dans des polyéthers, des polyalkylèneglycols, des paraffines ou des polyoléfines ayant des points de solidification entre 20° et 120° C.

3. Dispersions selon les revendications 1 ou 2, caractérisées en ce qu'elles se présentent comme des dispersions dans des polyéthylèneglycols ayant une température de ramollissement de 30° à 120°, de préférence de 30°à 70°C.

4. Dispersions selon les revendications 1 à 3, caractérisées en ce que la concentration en matières solides qu'elles contiennent, est de 1 à 50 %, de préférence de 20 à 50 %.
